# EUROPEAN PATENT APPLICATION

(11) **EP 0 720 081 A2**
(43) Date of publication of application: **03.07.1996**
(21) Application number: 95308957.0
(22) Date of filing: 11.12.1995
(51) Int. Cl.: G06F 3/023, G06F 17/60

(54) **Graphical user interface for displaying attributes of received messages**

(30) Priority: 28.12.1994 US 360247
(71) Applicant: AT&T Corp., New York, NY 10013-2412 (US)
(72) Inventor: Dennehy, Thomas Gerard, Bloomfield Township, Michigan 48301 (US); Cordell, Anne, Upper Montclair, New Jersey 07043 (US); Ensor, Myra L., Summit, New Jersey 07901 (US); Gaylin, Kenneth Bard, Edison, New Jersey 08820 (US); Hodgson, Garrett Gayer, Basking Ridge, New Jersey 07920 (US)
(74) Representative: Johnston, Kenneth Graham

(57) **Abstract**

The present invention provides a graphical user interface for a telecommunications system preferably forming an integrated answering system (115) having a display means (1) comprising a television receiver (101) and an input control device (3) comprising a hand-held remote control (125). The answering system (115) is coupled to a telephone network (4) to provide a communications medium in addition to one or more devices such as a telephone and an attached printer. The graphical user interface comprises a message screen (206) displayed on the television receiver (101) for displaying, at a glance, the attributes of a plurality of audio, video, data and/or script messages (29). The message screen (206) is broken down into a message information frame (6) for displaying pertinent information for a plurality of messages (29) and an output control frame (8) for displaying the controls and related information needed to manipulate their output. The information frame (6) presents the attributes of the messages (29) in a sequential ordering of message entries, preferably chronological, from line-to-line. These attributes may include among other things an associated message number (207), a calling party identifier (209), a message status indicator (211), the time (213) and date (215) of the message (29) in addition to a message icon (217) that graphically portrays the type and size of the message (29). The control frame (8) comprises in the preferred embodiment a plurality of graphically represented output function buttons (85) to be used in conjunction with a remote control (125) having the same arrangement of function buttons (611) for selecting messages (29) to be output and for manipulating the actual output of the messages (29). When a message (29) is selected, the message icon (217) is displayed within the control frame (8) and can be manipulated by the remote control (125) to control the output of the messages (29).

## Description

### Background of the Invention

### Field of the Invention

This invention relates to user interfaces generally, and more specifically, to graphical interfaces which display information pertaining to messages received at some type of display terminal via a network.

### Description of the Prior Art

A graphical user interface generally comprises some form of display that graphically represents to the user information about an apparatus or system, and further provides some control mechanism that enables the user to interact with the information displayed so as to control the apparatus or system.

The most well-known graphical user interfaces are those used for computer systems. With such interfaces, the computer system's display includes graphical representations of objects controlled by the computer system, graphical representations of controls such as buttons, and displays of menus. Typically, control inputs come from the keyboard, although with newer multi-media systems, the control input is derived from a pointing device such as a mouse or a track ball. The pointing device typically includes up to three buttons, and is used to move a pointer on the display, while the buttons are used to indicate an action to be performed on the object at the present location of the pointer. Where alphanumeric input is required, it is provided from the keyboard. With proper design of the graphical displays and of the interactions between the pointing device, the keyboard, and the graphical display, it is possible to build powerful user interfaces for complex systems which nevertheless remain easy to learn and easy to use.

Even though graphical user interfaces are clearly superior to earlier user interfaces, their use has been limited to computer systems and to some devices, such as VCRs, which are themselves capable of producing displays either on the device itself or on an associated monitor. Referring to computer-based user interfaces, the graphic display is typically generated by means of a specific software application being executed at the time, with the object and control representations chosen so as to present the most important information in the most appealing and user-friendly manner. With reference to devices having their own display capability, whether it be on the device itself or separate therefrom, the interface provided is quite limited because such devices typically lack the program code and processing power needed to implement a graphic display with which the user can interact to control operation of the device.

Furthermore, with the recent desire to bring telecommunications technology and applications into the user's home and office, telephones and answering systems are currently being integrated with personal computers so as to provide more elaborate telephony features and services within the user's premise. For example, the personal computer can now be used as an answering machine for receiving and storing messages left by a calling party. Due to this new development, however, some form of user interface must now be provided to display the information necessary for acknowledging to the user the receipt of messages in addition to the means by which the user must interact with the display to output the messages.

Accordingly, it is an object of the present invention to provide a graphical user interface for the display of received messages which facilitates the reviewing of message-related information and enables the control interaction needed to output the messages.

It is a further object of the present invention to provide such an interface for an integrated telecommunications systems comprising in one embodiment the combination of a telephone, answering system, fax machine and television receiver, with the receiver being utilized as the display means.

### Summary of the Invention

The present invention provides a graphical user interface for a telecommunications system, which system comprises at least a display means for displaying messages and a control means for selecting and manipulating the output of the messages. The graphical user interface itself comprises a message screen specifically created to display, at a glance, the most pertinent attributes of a plurality of audio, video, data and/or script messages. The message screen can be conceptually broken down into a message information frame for displaying pertinent information for a plurality of messages and an output control frame for displaying the controls and related information needed to manipulate the output of the messages.

The information frame presents the attributes of the messages in a sequential ordering, preferably chronological, from line-to-line. These attributes may include among other things an associated message number, a calling party's number or name, the status of the message (i.e., new or old), the time and date of the message, the message type in addition to the size of the message. The control frame comprises in the preferred embodiment a plurality of graphically represented output function buttons forming a rewind button, a play button, a fast-forward button, a record button, a stop button, and a pause button used to control the output of selected messages and the recording of memos. Other additional buttons that may be included in the graphical display include a scroll-up button and a scroll-down button for reviewing and selecting message entries, a delete button for discarding messages and an exit button for exiting messages without discarding them. This frame is used in conjunction with an input device forming either a cursor control device or a hand-held controller having substantially the same arrangement of function buttons as those in the control frame for selecting messages to be output and for manipulating the actual output of the messages.

Once a message is selected , a message icon, which graphically portrays the type and size of the message, is displayed within the control frame. By means of selecting the appropriate buttons on the hand-held controller corresponding to the function buttons displayed within the control frame, or alternately using a cursor control device or cursor keys to manipulate the features of the size icon, the user is able to begin the output of the message in addition to selecting exactly that portion of the message which he desires to output.

### Brief Description of the Drawings

**Figure 1** presents a block diagram of a generalized telecommunications system in which the present invention is implemented.

**Figure 2** presents a block diagram of a specific, integrated telecommunications system in which the present invention is preferably implemented.

**Figure 3(A)** portrays an exemplary message screen of the graphical user interface of the present invention, showing the message icon for audio and/or video messages being displayed within the message control frame.

**Figure 3(B)** portrays an exemplary message screen of the graphical user interface of the present invention, showing the message icon for facsimile and script messages being displayed within the message control frame.

**Figure 4** portrays one embodiment of the input control device forming a hand-held, remote controller having a plurality of function buttons for selecting messages and manipulating their output in conjunction with the control frame of the message screen.

### Detailed Description

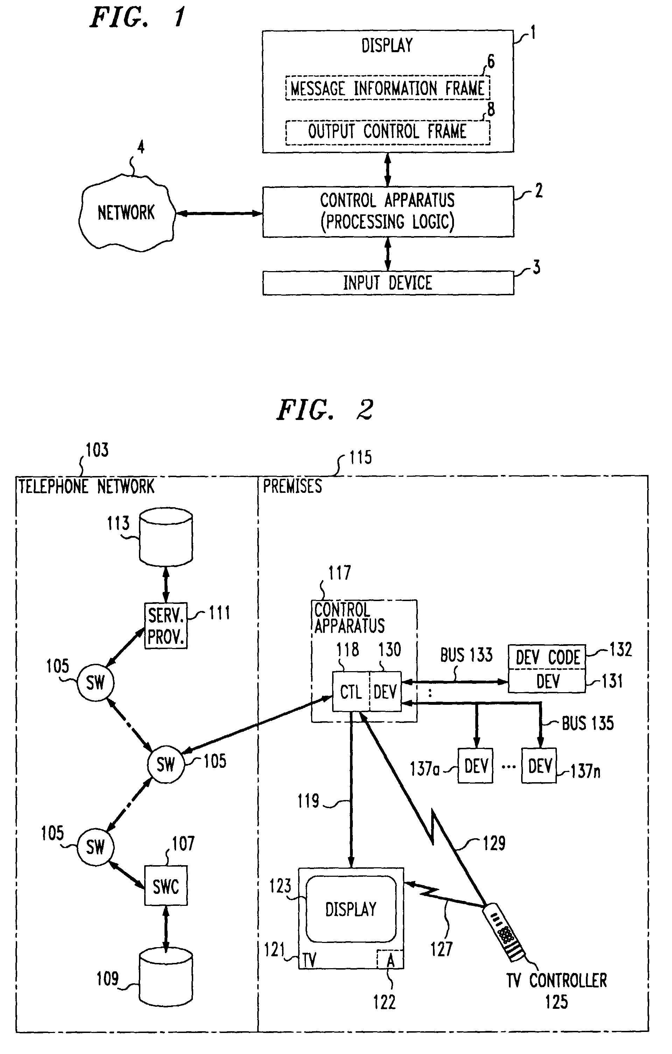

The present invention provides a graphical user interface for a telecommunications system. With reference to the generalized system shown in **Figure 1**, the system comprises at least a control apparatus 2 having processing logic for processing incoming calls, a display means 1 for displaying messages and an input control device 3 for selecting and manipulating the output of received messages. In a preferred embodiment, shown in **Figure 2**, the telecommunications system 101 forms an integrated answering system comprising a control apparatus 117 coupled to each of a television receiver 121, a telephone network 103 and one or more devices 133, such as a telephone and an attached printer. An example of such a system is set forth in a co-pending application entitled "Apparatus for providing a graphical control interface" Serial No. 08/292476, filed August 18, 1994 and assigned to the assignee hereof.

The control apparatus 117 functions as a digital answering system and utilizes the television receiver 121 as the display means for presenting the graphical user interface. The input control device 3 (hereinafter referred to as a "TV controller" 125) for the system 101 preferably comprises a remote control having function buttons, although a cursor control device such as a mouse or track ball may also be used. The control apparatus 117 emulates a digital answering system and can store character-string messages, fax messages, and script messages. The latter messages are programs to be executed by control apparatus 117. When the user of system 101 wishes to listen to his messages, he uses TV controller 125 to put TV 121 and control apparatus 117 into a mode in which input from TV controller 125 will be interpreted by control apparatus 117 instead of TV 121.

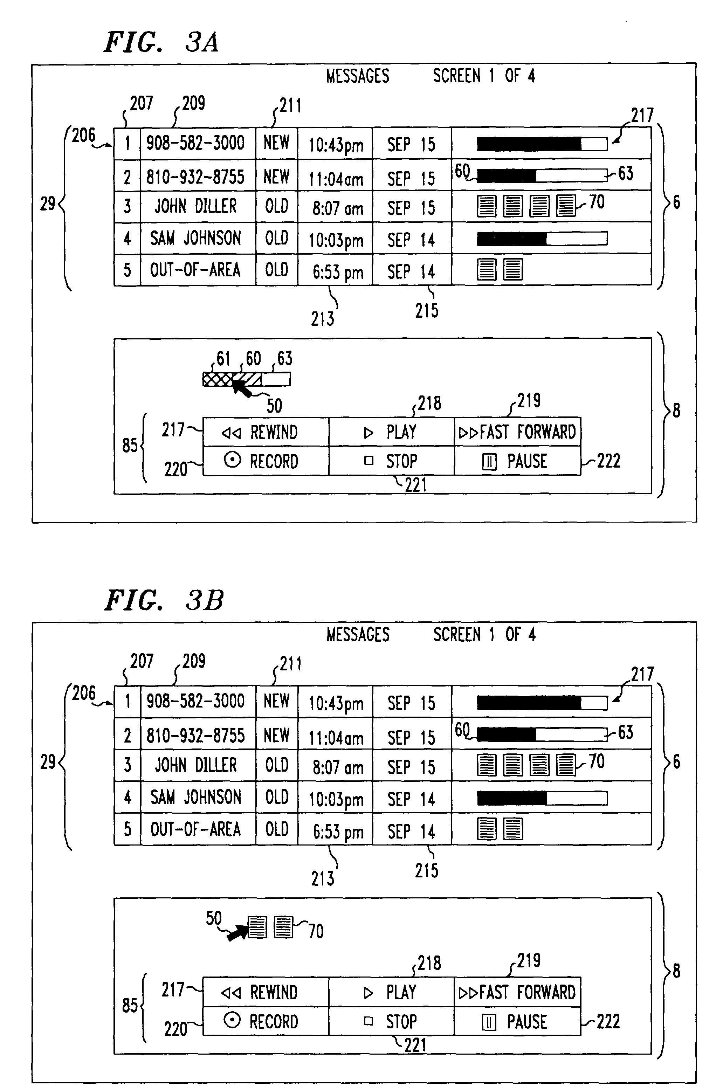

Using TV controller 125, the user can select the desired device or service. If the user selects answering system 130, control apparatus 117 outputs the message screen 201 shown in **Figure 3** which forms the display for the graphical user interface of the present invention. The message screen is specifically created to display, at a glance, the attributes of a plurality of audio, video, data and/or script messages. As shown in **Figures 1, 3(A) & 3(B)**, the message screen can be broken down into a message information frame 6 for displaying the attributes of the messages and an output control frame 8 for displaying the controls and related information needed to manipulate the output of the messages.

The message information frame 6 comprises a sequential listing of message entries 206 preferably presented in a line-by-line, chronological ordering, with each entry presenting the attributes of its associated message. These attributes include among other things an associated message number 207, a calling party's identification 209 forming either the party's number or name (when such information is available), the status of the message (i.e. new or old) at 211, the time and date of the message (213, 215), and finally, a message icon 217 indicating both the type and size of the message.

The numbers 207 associated with the message entries 206 provide the user with the ability to selectively retrieve the messages out-of-order to give priority to a particular message for playing (audio and audio-video messages), or for reading or printing (facsimile and script messages). The "size" of each message - that is, the amount of message data contained within the message - is represented by a message icon 217 that instantly conveys the overall size of the message that has been received. For audio and/or video messages, this icon 217 preferably forms a bar graph 60 set within a reference frame 63, which together instantly identify the actual size of the received message. For facsimile and script messages, the icon 217 preferably forms a sequence of page representations 70 indicating the total number of pages received. These icons 217 are produced and displayed for each message entry 206 in the information frame 6.

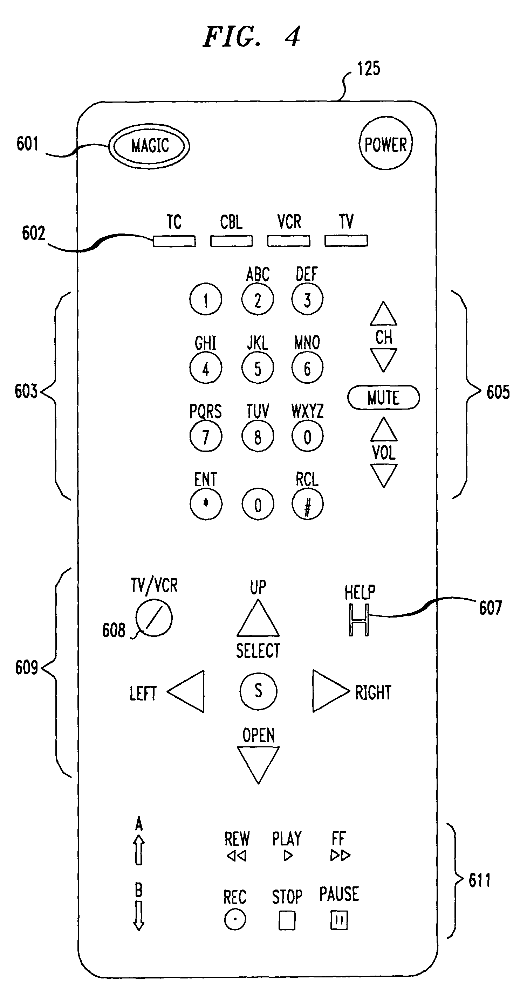

The output control frame 8 comprises in the preferred embodiment a plurality of graphically represented output function buttons 85 forming a rewind button 217, a play button 218, a fast-forward button 219, a record button 220, a stop button 221 and a pause button 222 for use in controlling the output of a selected message in addition to the recording of memos. Other useful function buttons of the controller 125 (see **Figure 4**) that may be included in the display comprise a scroll-up button and a scroll-down button for scrolling through the message entry listing, a delete message button for discarding message entries and an exit message button for exiting the entry without discarding the message.

An important advantage of the present invention is that the control frame 8 of the message screen 201 displayed on TV 121 greatly increases the usability of TV controller 125 as a control input device 3. In the preferred embodiment, the control frame 8 is used in conjunction with the TV controller 125 for selecting messages to be output and for manipulating the actual output of the messages. As shown in **Figures 3(A), 3(B) & 4**, the function buttons 85 presented in the control frame 8 are designed to generally reflect the type and arrangement of function buttons on the TV controller 125. In this manner, screen 201 shows precisely the buttons that have meaning while the screen is being displayed and also provides an idea of the function of a given button without need to memorize its function or to refer to an operating manual. Screen 201 thus never leaves the user in the dark concerning what buttons are presently relevant and how they are relevant. Equally important is the fact that displaying the relevant buttons in screen 201 permits control apparatus 117 to redefine the meanings of the buttons according to the context in which they are being used.

To output a message corresponding to a particular message entry 206, the scroll up and scroll-down buttons on the controller 125 are used to peruse through the listing of messages until the desired message is found. Although the information frame 6 provides only enough space in the preferred embodiment to display five entries 206 at a time, up to fifty entries can be held in memory and accessed by means of continuous scrolling downward which causes the displayed entries to sequentially move upward off of the information frame 6 as new ones are added to the bottom of the listing. However, the associated message numbers 207 adjacent to the entries 206 do not themselves move.

Contrary to what would be expected, the message numbers 207 form "soft buttons" which remain stationary within the screen 201 and are only temporarily associated with each message entry 206. The reason for using the soft buttons 207 is that they provide the additional benefit of minimizing the number of numeric function keys required on the controller 125. Nonetheless, it would be possible to provide an information frame 6 in which the listing of entries can be scrolled yet each entry 206 would have a unique, chronological reference number assigned to it. It would also be foreseeable that the information frame 6 could be replicated for each grouping of five entries such that when the user has scrolled to the bottom of the entry group, the next sequential grouping of five entries is then displayed within the information screen 6.

Once the desired message entry 206 has been located within the listing, it is selected (i.e. made active) by inputting into the TV controller 125 (via its numeric buttons) its associated message number 207. At this time, the corresponding message icon 217 is replicated within the control frame 8 (or proximate thereto), as shown in **Figures 3(A) & 3(B)**, to indicate the selected message is ready for output. By means of selecting the appropriate buttons on the TV controller 125 corresponding to the function buttons 85 displayed within the control frame 8, the user is then able to begin the output of the message in addition to selecting exactly that portion of the message which he desires to output.

For example, when an audio and/or video message is retrieved for listening and/or viewing, the bar graph 60 and reference frame 63 forming the message icon 217 for the selected message are preferably displayed just above the function buttons 85, as shown in **Figure 3(A)**. The reference frame indicates the maximum allowable play time for any message, which in the preferred embodiment is 4 minutes, although such a time period is variable depending upon the amount of memory allotted for each message. The bar graph 60, otherwise referred to as the "length bar" (indicated by the slanted lines in **Figure 3(A)**), immediately signifies to the user the actual total length of the message to be played.

To hear or play the message, the user depresses the play button on the TV controller 125 corresponding to the play button 221 shown in the control frame 8. As the message is played, either audibly or visually in a video portion of the message screen (not shown), a second "play" bar 61 (indicated by the cross-hatched lines in **Figure 3(A)**) then appears as a superimposition over the length bar 60. Throughout message output, the play bar 61 increases in length from zero units to a maximum number of units forming the total actual size of the message so as to indicate to the user at any given time how much of the message has been output in addition to how much of the message is remaining for output. Accordingly, at the end of message output, the play bar 61, which preferably comprises a first distinctive color, will then completely cover the length bar 60, comprising a second distinctive color, so as to indicate that the entire message has been played.

Additionally, the graphical user interface of the present invention further permits the output of the messages to be controlled by means of manipulating the corresponding message icons through use of the rewind button, the play button, the fast-forward button, the stop button and the pause button provided on the controller 125, or alternatively through use of a cursor control device or cursor keys on the controller 125 in conjunction with the graphical buttons 217, 218, 219, 221, and 222 displayed in the control frame 8. By activating one of the rewind and fast-forward buttons during message output, the user can visually manipulate the length of the play bar 61 of the icon 217 for the selected message in order to begin or resume playing at any desired location within the message (i.e. within the length bar 60). Hence, by providing within the graphical user interface an icon 217 having a variable size or shape controllable through input by the user, the user is provided with the unique capability of selecting only those portions of the message that he desires to output.

With respect to selecting and outputting both facsimile and script messages, the icon 217 in these cases forms a series of sequential page representations 70 indicating the number of pages or frames of information contained within the messages, respectively. As shown in **Figure 3(B)**, the icon 217 for a particular message is again replicated proximate to the function buttons 85 of the control frame 8 when selected for output. The user may then select the play button 221 to sequentially display or print out each page (or frame) of the message from the beginning, or alternatively, he may select one or more pages out of order through use of the rewind and fast-forward buttons for subsequent output when the play button is selected.

In accordance with an alternate embodiment of the present invention, the controller 125 comprises a cursor control device such as a mouse or track ball for positioning an on-screen cursor or arrow 50 (shown in **Figures 3(A) & 3(B)**) within the message screen 201 and selecting a particular feature of the display for function activation. Through the use of a cursor control device, the user first finds a desired message by using the scroll buttons (not shown) to peruse the messages. The appropriate message entry 206 is then selected by clicking on its associated message number 207. When the icon 217 for the selected message is displayed within the control frame 8, the user may then either select (via cursor activation) the displayed function buttons 85 to manipulate the message output as described above, or alternatively, may directly modify or select a feature of the size icon 217 which causes the output to be manipulated in the same way as with the function buttons 85.

With reference to the icon 217 displayed within the control frame 8 of **Figure 3(A)**, the user is able to select the precise point in the message for message output by moving the tip of the arrow 50 to the edge of the play bar 61 and dragging it back and forth (via depressing of the device's activation button during movement) on top of the length bar 60. Once the desired length of the play bar 61 has been chosen, the user then uses cursor activation to select the play button 221 and begin output of the message. However, if the message is already being played when the user repositions the play bar 60, the resumption of message output will be automatic.

Moreover, with reference to the other class of icons 217, such as that shown in **Figure 3(B)**, the cursor control device is used to select the appropriate page (or frame) of the message by depressing the device's activation button when the arrow 50 is disposed over the desired page. Output of the page or a series of pages beginning with the selected page is then performed by activating the play button 221 with the arrow 50, or alternatively, double clicking the device's activation button while the arrow is positioned over the desired page.

While the embodiments described herein disclose the primary principles of the present invention, it should be understood that these embodiments are merely illustrative since various additions and modifications, which do not depart from the spirit and scope of the invention, are possible. Accordingly, the forgoing Detailed Description is to be understood as being in all cases descriptive and exemplary but not restrictive, and the scope of the invention is to be determined not from the Detailed Description, but rather from the claims as interpreted according to the full breadth permitted by the patent laws.

## Claims

1. A graphical user interface for integrally displaying a variety of received messages comprising messages selected from the group consisting of audio messages, video message, facsimile messages and script messages, the graphical user interface
CHARACTERIZED BY:
a display having a plurality of rows for presenting in a sequential order attributes of the received messages; and
the message attributes of each received message comprising at least
a message identifier associated with the sequential ordering of the received message,
a date and time identification indicating the date and time when the message was received, and
a message icon for visually representing the amount of message data contained within each received message, the message icon for each audio and video message comprising a bar graph set within a reference frame, with the length of the reference frame indicating the maximum possible length of each audio and video message and the length of the bar graph indicating the actual length of each audio and video message, and the message icon for each facsimile and script message comprising a plurality of page representations corresponding to the number of actual pages of data contained within each facsimile and script message.

2. The graphical user interface of claim **1**, wherein the message icon for each audio message and video message further comprises a play bar superimposed over the bar graph having a first end increasing in length during message output from zero units to a maximum number of units corresponding to the total actual length of the message to indicate the amount of message data output and the amount of message data remaining to be output at any given time during message output.

3. The graphical user interface of claim **2**, wherein an input control device interacting with the display of the graphical user interface is used to manipulate the position of the first end of the play bar of the message icon of a selected message within the reference frame of the message icon for choosing a starting point for message data output, the input control device comprising one of a cursor control device and a remote control having a plurality of function buttons for function activation.

4. The graphical user interface of claim **1**, wherein an input control device interacting with the display of the graphical user interface is used to output one or more desired pages of data for each of the facsimile and script message through selection of corresponding page representations, the input control device comprising one of a cursor control device and a remote control having a plurality of function buttons for function activation.

5. A graphical user interface for displaying portions of received messages on a television receiver, the television receiver coupled to a telephone network for sending and receiving messages via the network, the graphical user interface
CHARACTERIZED BY:
a display presented on the television receiver having a plurality of rows for displaying in a sequential order portions of the received messages comprising message attributes; and
the message attributes of each received message comprising at least
a message identifier associated with the sequential ordering of the received message,
a date and time identification indicating the date and time when the message was received, and
a message icon for visually representing the amount of message data buffered for each received message, the message icon being variable in one of size and form during message output comprising one of audio play and visual viewing for simultaneously indicating the amount of message data output and the amount of message data remaining during message output.

6. The graphical user interface of claim **5**, wherein the messages displayed comprise messages selected from the group consisting of audio messages and video message having corresponding message data stored in a message data buffer, and wherein the message icon for each message comprises a bar graph set within a reference frame, with the length of the reference frame indicating the maximum possible length of the message and the length of the bar graph indicating the actual length of the message.

7. The graphical user interface of claim **6**, wherein during message output the corresponding message icon further comprises a play bar having a first end increasing in length from zero units to a maximum number of units corresponding to the total actual length of the message to indicate the amount of message data output and the amount of message data remaining to be output at any given time during message output.

8. The graphical user interface of claim **7**, wherein the television receiver receives control input from a controller coupled to the television receiver, the controller having a plurality of function buttons for manipulating the output of the messages, with the first end of the play bar of the size icon for a selected message being movable within the reference frame in accordance with activation of the function buttons of the controller to a position indicating a starting point for message output.

9. The graphical user interface of claim **5**, wherein the messages displayed in the graphical user interface comprise messages selected from the group consisting of facsimile messages and script messages having corresponding message data stored in a message data buffer, and wherein the message icon for each message comprises a plurality of page representations corresponding to the number of actual pages of data stored within the message data buffer.

10. The graphical user interface of claim **9**, wherein the television receiver receives control input from a controller coupled to the television receiver, the controller having a plurality of function buttons for use in selecting messages from the display for message output and for outputting one or more desired pages of data of a selected message through selection of corresponding page representations.
